# EUROPEAN PATENT SPECIFICATION

(11) **EP 2 335 489 B1**
(45) Date of publication and mention of the grant of the patent: **21.02.2018**
(21) Application number: 10195455.0
(22) Date of filing: 16.12.2010
(51) Int. Cl.: A23C 19/16, A01J 25/16, A01J 27/02, B65D 85/76, B65D 65/00, A23C 19/068, A23C 19/072

(54) **Method for ripening a cheese**
Verfahren zur Reifung eines Käses
Procédé de maturation d'un fromage

(30) Priority: 01.12.2010 NL 2005792; 17.12.2009 EP 09179654
(43) Date of publication of application: 22.06.2011
(73) Proprietor: CSK Food Enrichment B.V., 8938 AS Leeuwarden (NL)
(72) Inventor: Haarman, Martinus Gerardus Maria, 9035 VC, Dronrijp (NL); Koopmans, Wieger Jan, 8911 ET, Leeuwarden (NL); Meijer, Willem Cornelis, 6712 HA, Ede (NL); Kevelam, Jan, 6718 HR, Ede (NL)
(74) Representative: Nederlandsch Octrooibureau

(56) References cited:
- EP-A2- 0 384 553
- EP-A2- 1 099 543
- WO-A1-2005/090467
- WO-A1-2010/094682
- WO-A2-2009/047332
- FR-A1- 2 600 310
- GB-A- 2 291 407

## Description

### Field of the invention

The present invention relates to a method for foil-ripening a cheese and to a (foil-packaged) cheese obtainable by such method.

### Background of the invention

Methods for foil-ripening a cheese are known in the art. According to a conventional process for providing a "foil-ripened" or "rindless" cheese, a freshly brined cheese block is packaged into a closed water-impermeable multilayer foil and is then ripened, usually by storage at 7-18 °C during at least 4 weeks. An advantage of the known foil ripening process relates to favourable logistics aspects of the ripening stage. During ripening, the packaged cheese blocks are commonly stacked in layers. Herein, each layer comprises several foil-packaged cheeses which are in close (lateral) contact with each other. The entire stack is tightly surrounded by a crate or the like. After a desired ripening time has been obtained, the foil-packaged cheeses are removed from the stack. The foil can then removed from the ripened cheeses and the resulting cheese blocks can be conveniently sliced or cut before consumption and/or transportation. Another advantage of the traditional method for preparing foil-ripened cheese is that the cheese does not lose moisture during ripening. This is because the (multilayer) foil in which it is packaged during ripening is essentially impermeable to water vapour.

In order to provide ripened cheese which corresponds more to "natural ripened" cheese, WO2009047332 discloses a process for preparing foil-ripened cheese comprising ripening a cheese after brining in a cheese-aging packaging comprising a thermoplastic, monolithic film. The closed cheese-aging packaging has a water vapour transmission rate of at least 10 g/m²/24 hours (measured according to ASTM E96B cup test at 10 °C and 85% relative humidity on a film) and an oxygen permeability of at most 100 cm³/m².24 hours.atm (measured according to ASTM standard D3985 at 10 °C and 85% relative humidity on a film using Mocon equipment).

GB2291407 describes a cheese container comprising a base, a lid and a tubular wall portion which together form a compartment within which cheese is to be accommodated. At least one of the lid and base is displaceable within the tubular wall portion to vary the size of the compartment. The cheese container is characterised by strap means that are engageable around the base and lid to maintain the base and lid at a maximum predetermined spacing from each other for alleviating distortion from its intended shape of cheese accommodated within the compartment.

FR2600310 describes a stackable package, constituted by a rigid box comprising a bottom and open on its face opposite this bottom. The box comprising in its corners blocks protruding with respect to one of the faces of the box. In alignment with the blocks and on the other face of the box, cells are formed capable of receiving the blocks protruding from another box. The depth of these cells is less than the protruding height of the blocks. The stackable package is applied, in particular, to the packing of cheese.

### Summary of the invention

A disadvantage of known (including traditional) foil-ripening processes may be that the development of a typical cheese flavour and consistency may lag, especially as compared with the characteristics of a "natural ripened" (coated) cheese such as described in for example EP1537785, even if the foils of WO2009047332 are employed having a water vapour permeability of at least 10 g/m².day. Herein, "traditional foil ripening" refers to a foil ripening process for cheese wherein the foil is a so-called "barrier foil" i.e. having a water vapour permeability of less than 10 g/m².day, typically less than 5 g/m².day such as 1 g/m².day or even less; and wherein the oxygen transmission rate of the foil is substantially less than 100 cm³/m².24 hours.atm, such as 40 cm³/m².24hours.atm or less (at 12°C and 85%RH).

On a separate notice, in the process according to WO2009047332, the cheeses are preferably not stacked during ripening as in the traditional foil-ripening process. In a stacked arrangement, moisture will not evaporate from each foil-packaged cheese (at least to a comparable degree amongst different cheeses). Instead it is preferred that in the process of WO2009047332, during ripening at least part (preferably at least 25%, more preferably at least 40%, most preferably at least 60%) of the surface of the foil-packaged cheese is exposed to an atmosphere having a relative humidity of less than 100%. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

However, it has been observed that under conditions of "individual ripening" of foil-packaged cheeses, the cheeses tend to lose their original shape in time. In particular, they tend to flatten in a direction parallel to the force of gravity, and to expand in a direction perpendicular to the force of gravity. This shape loss, which increases with increasing ripening time, is highly undesirable since many industrial apparati, forms of packaging etc. used in cutting, slicing and/or packaging the foil-ripened cheese, rely on standardised dimensions thereof which need to be met within tight limits. Furthermore, said shape loss of the cheese may generally lead to unwanted cheese loss occurring during cutting or slicing of the cheese.

In order to obviate prior art disadvantages, such as of the process according to WO2009047322 and/or optionally to at least diminish shape-loss of foil-packaged cheese during (individual) ripening, the present invention provides a method for foil-ripening a Gouda-type cheese comprising:
a. providing a cheese having an edge, a first face and a second face;
b. packaging said cheese in a closed cheese-ripening foil having a water vapour transmission rate (WVTR) of preferably at least 5 g/(m².24 hours) at 12 °C and 85% relative humidity, and having an oxygen transmission rate (OTR) of at least 120 and < 1000 cm³/m².24 hours.atm (at 12°C and 85%RH); and
c. ripening this foil-packaged cheese wherein during ripening moisture is allowed to evaporate from said cheese, wherein the ripening is optionally in the presence of a frame which surrounds at least part of the edge of said cheese, wherein when the ripening is in the presence of the frame, preferably the frame is in contact with the edge in the range of 1-80% of the surface of the edge, especially in the range of 10-80% of the surface of the edge.

Especially, the present invention provides a method for foil-ripening a Gouda-type cheese comprising:
a. providing a cheese having an edge, a first face and a second face;
b. packaging said cheese in a closed cheese-ripening foil having a water vapour transmission rate of at least 5 g/(m².24 hours) at 12 °C and 85% relative humidity, and having a oxygen transmission rate of preferably at least 120 and < 1000 cm³/m².24 hours.atm (at 12°C and 85%RH); and
c. ripening this foil-packaged cheese, optionally in the presence of a frame which surrounds at least part of the edge of said cheese, wherein the frame is in contact with the edge in the range of 1-80%, especially 10-80% of the surface of the edge, and wherein during ripening moisture is allowed to evaporate from said cheese.

The water vapour transmission rate of the cheese-ripening foil is preferably measured according to ASTM E96B cup test at 12 °C and against 85% relative humidity (the relative humidity within the cup is 100%).

The cheese obtained with such ripening method may have a desirable and pleasant flavour, comparable to especially Gouda cheese, due to the presence of key flavours, which may not be the case, or to a lesser extent, with prior art foil-ripened cheeses.

Hence, there is also described the use of the cheese-ripening foil as defined herein, for foil-ripening a cheese, especially a Gouda-type cheese, with naturally ripened flavour characteristics. Even more especially, there is described the use of a cheese-ripening foil as defined herein, for foil-ripening a cheese, especially a Gouda type cheese, having an enhanced flavour spectrum of one or more of (preferably at least two or more of, yet even more preferably at least three or more of) 2-methylpropanoic acid, 2-methylbutanoic acid, 3-methylbutanoic acid, butyric acid, 2-methylpropanal, hexanoic acid, octanoic acid, and decanoic acid, more especially one or more of (preferably at least two or more of, yet even more preferably three of) 2-methylbutanoic acid, 3-methylbutanoic acid, and octanoic acid, relative to foil ripenened cheese, especially a Gouda type cheese, with a foil having an OTR value ≤ 100 cm³/m².24 hours.atm at 12 oC and 85% relative humidity.

Without being bound to theory, it is believed that the branched chain acids 2-methylbutanoic acid and 2-methylbutanoic acid are obtained by amino acid catabolysis of strains of *Lactococcus lactis* present in the cheese, as part of the starter culture; cf. E. Chambellon et al. in J. Bacteriology 2009, 191, pp. 873-881. Thus, there is also described the use of the cheese-ripening foil as defined herein, for foil-ripening, especially a Gouda-type, cheese with naturally ripened flavour characteristics, wherein said flavour characteristics relate.

Thus in the method according to the invention, the cheese - which is of the Gouda type - contains branched organic acids obtainable by amino acid catabolism in *Lactococcus lactis* spp., preferably in levels which are comparable to those occurring in naturally ripened - preferably Gouda type - cheese. Hence, the invention also provides a method as defined herein, wherein the cheese is of the Gouda type, wherein the cheese contains branched organic acids obtainable by amino acid catabolism in Lactococcus lactis spp in levels which are comparable to those occurring in naturally ripened cheese, of the Gouda type. Hence, the cheese-ripening foil may be used for foil-ripening a Gouda-type cheese, having an enhanced flavour spectrum of one or more of 2-methylbutanoic acid, 3-methylbutanoic acid, and octanoic acid, relative to foil ripened cheese, especially a Gouda type cheese, with a foil having an OTR value ≤ 100 cm³/m².24 hours.atm at 12 °C and 85% relative humidity.

In an embodiment, the cheese has a flat-cylindrical shape which may correspond to that of a (Gouda) cheese wheel. More preferably, the cheese is an essentially block shaped cheese. It is further preferred that the block-shaped cheese has a length (L), a width (b) and a height (h), the height preferably being smaller than the length and the width. Then, the dimensions of each of the first face and the second face are essentially provided by the length and the width of said cheese, and the edge is essentially described by the remaining surface area residing in between the first and the second face. In a further preferred example of an essentially block-shaped cheese, length L = 20-40 cm, width b = 20-70 cm and height h = 5-15 cm. The essentially block-shaped cheese is preferably a so-called Euroblock-cheese, having approximate dimensions length L = 30 cm, width b = 50 cm, height h = 10 cm. In an embodiment, the cheese may be substantially spherical, with small substantially flat first and second faces, such as an Edam type of cheese.

The invention also provides a foil-packaged Gouda-type cheese *per se,* obtainable after the method of foil-ripening.

### Detailed description of the invention

### Description of the figures

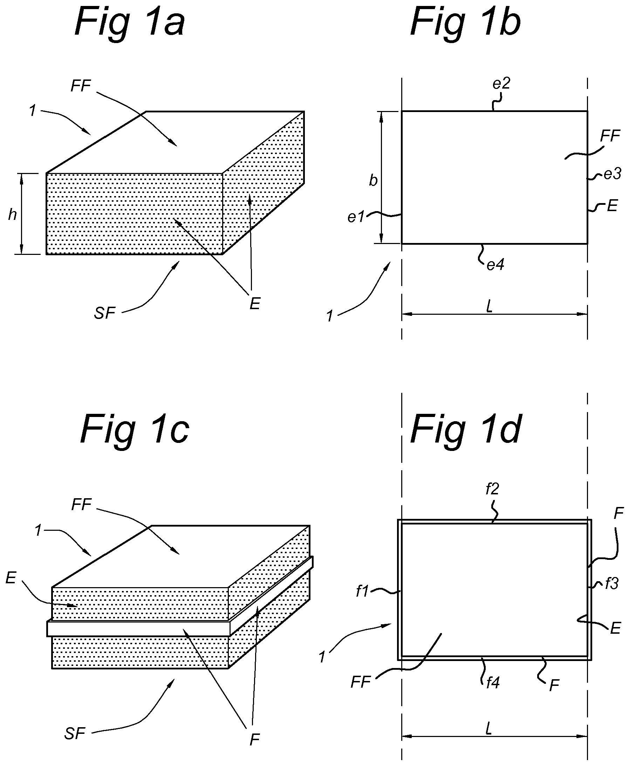

Figure 1a illustrates an example of an essentially block shaped foil-packaged cheese in perspective view (top left) The cheese (indicated with reference 1) resides with its second face (SF) on an imaginary horizontal surface. Its first face (FF) faces upwards. The visible part of the edge (E) is shown in a dotted pattern. The height of the cheese 1 is indicated with reference h.
Figure 1b shows the same block-shaped foil-packaged cheese in top view. Joint line pieces e1+e2+e3+e4 form the top view projection of the edge E of the (foil-packaged) cheese 1. Line pieces e2 and e4 have outer dimensions L (length); line pieces e1 and e3 have outer dimensions b (width).
Figure 1c illustrates an example of the essentially block-shaped foil-packaged cheese, now surrounded by a frame in perspective view. The frame (F) surrounds the edge E of the foil-packaged cheese, partly covering it. Hence, the frame surrounds at least part of the (foil-packaged) cheese. As will be clear to a person skilled in the art, the frame F may also entirely surround the (foil-packaged) edge E.
Figure 1d provides a top view of the essentially block-shaped foil-packaged cheese surrounded by the frame (F). Joint line pieces fl+f2+f3+f4 form the top view projection of the frame surrounding the cheese 1. As shown by the dotted lines, the inner dimensions of the frame (F) match the outer dimensions of the edge (E).

In the schematic drawings of figure 1c and 1d, the frame F surrounds (or is extending over) the total length of the edge E (i.e. edges e1, e2, e3 and e4, thus 2 x L + 2 x b), but the height of the frame is smaller than the height h of the edge E. The total length of the edge E is herein also indicated as circumferential length.

Figure le schematically depicts an example of cheese 1 having a flat-cylindrical shape which may correspond to that of a Gouda cheese wheel, with frame F surrounding at least part of the edge E. As will be clear to a person skilled in the art, the frame F may also entirely surround the (foil-packaged) edge E.

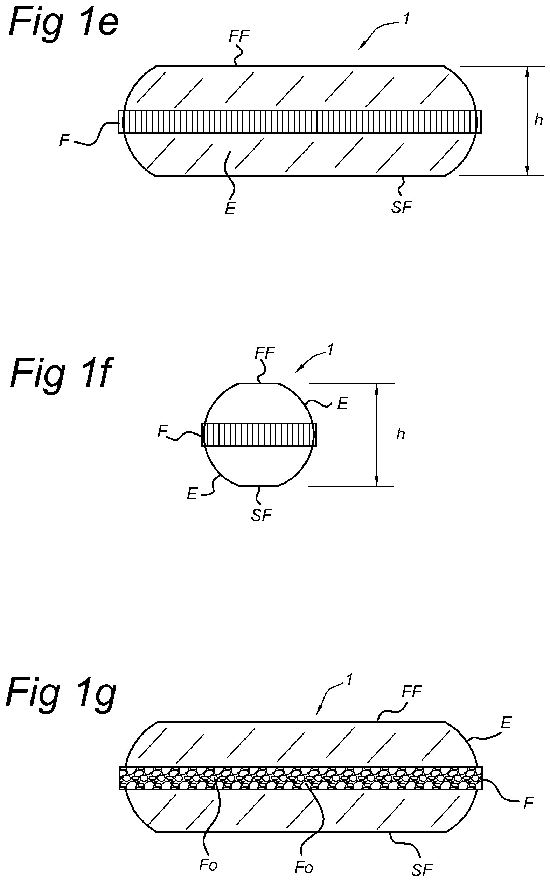

Figure 1f schematically depicts an example of cheese 1 having a substantially spherical shape, with small substantially planar parts at the top and bottom (i.e. first face FF and second face SF) which may correspond to that of an Edam type cheese. As will be clear to a person skilled in the art, the frame F may also entirely surround the (foil-packaged) edge E.

Figure 1g schematically depicts an embodiment wherein the frame F comprises openings, which may further allow water vapour to escape from the cheese into the surrounding atmosphere. The openings are indicated with reference Fo, and may have any shape. For instance, the frame F may have circular openings Fo, as here depicted, but the frame F may also be a grating type of frame, etc. As will be clear to a person skilled in the art, the frame F may also entirely surround the (foil-packaged) edge E.

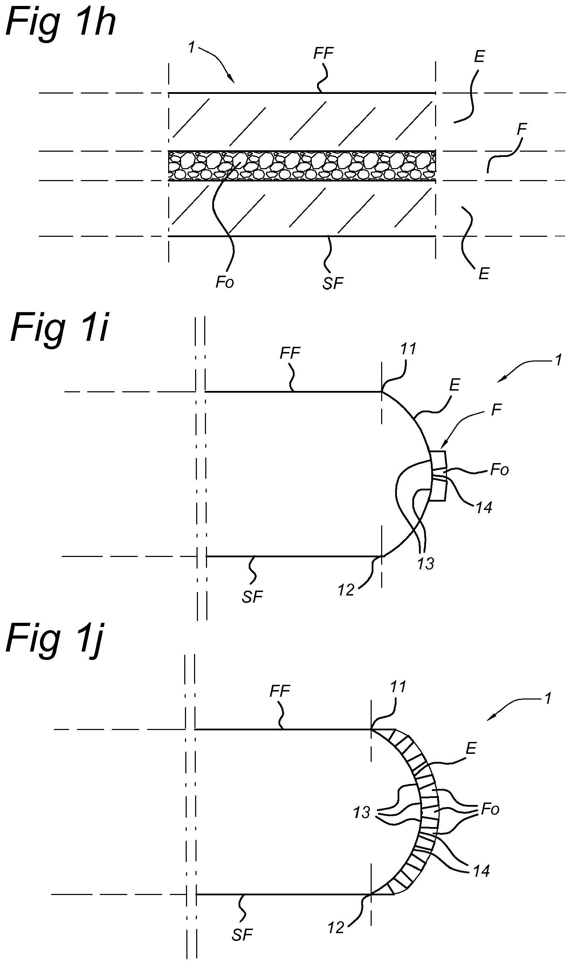

Figure 1h schematically depicts such frame F with openings or perforation Fo in more detail, again, by way of example with circular openings Fo.

The frame F is in contact with the edge E. To estimate the percentage the frame F is in contact with the edge E, the edge area in contact with the frame is related to the total edge area. When openings Fo are present, the edge area in front of the frame openings Fo is not counted as area of the edge E that is in contact with the frame F.

Figure 1i schematically depicts a cross-section of an embodiment of cheese 1 with frame F around the edge E. The first surface FF and second surface SF change into the edge E at positions 11 and 12, respectively. The edge E is in contact with the frame F at areas 13. Here, the frame F comprises an opening Fo. The edge "behind" this opening, indicated with reference 14, does thus not count as edge area in contact with the frame F.

Figure 1j schematically depicts an embodiment wherein the frame F entirely surrounds the (foil-packaged) edge E. Here, by way of example, a Gouda type of cheese is depicted, and by way of example the frame FD has perforations or holes Fo. As can be seen from this schematic drawing, the frame surrounds substantially the entire edge E (100% of E), but the contact surface of the frame F with the (foil-packaged) edge E is less than 100% in this embodiment, such as about 50-60%. This may facilitate moisture evaporation of the cheese, also via the edge E. Hence, in a specific embodiment, the edge is surrounded for 100% (or less) with the frame, but the frame is in contact with 80% or less of the edge (due to the presence of perforation or holes). The perforations or holes, herein, such as in the porous frames, are through-holes or through-perforations. The schematic drawings are not necessarily on scale. The perforation Fo may for instance have diameters in the range of 0.5 nm-50 mm.

Embodiments of the invention will be described, by way of example only, with reference to the accompanying schematic drawings in which corresponding reference symbols indicate corresponding parts, as indicated above. The drawings may not be drawn to scale. The invention is not limited to the embodiments schematically depicted in the drawings. For instance, the cheese 1 may also have a cylindrical shape.

### Definitions

The verb "to comprise" as is used in this description and in the claims, and its conjugations, is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The cheese-ripening foil. Preferably, the cheese-ripening foil is provided as a monolithic film. The monolithic film may be provided as a single layer foil or as a multilayer foil. As used herein, a monolithic film is a film not containing holes, perforations, pores or micro-pores that provide a direct pathway for water molecules to flow through. The monolithic film is in an embodiment preferably defined as in WO2009047332, with the exception that the foils are designed in such a way, that the OTR has the herein indicated value of at least 120 and < 1000 or even < 900 cm³/m².24 hours.atm. As indicated above, surprisingly it appears that the flavour composition is better at higher OTR values. However, the cheese-ripening film may also be provided as a perforated or (micro-) porous film or as a multilayer foil wherein optionally one or more of the layers are present as a perforated or (micro)porous film. Herein, the terms "perforated film" and "microporous film" are considered clear to the skilled person; these terms are preferably defined as in WO2009047332.

The cheese-ripening foil may especially have an oxygen transmission rate of at least 150 cm³/m².24 hours.atm, even more especially of at least 200 cm³/m².24 hours.atm at 12 °C and 85%RH. Further, especially the oxygen transmission rate is < 900 cm³/m².24 hours.atm at 12 °C and 85%RH. It appears that at lower OTR values, the flavour of the cheese may be less natural, and less in conformance with naturally ripened cheese. At higher OTR values, the ripening conditions may become less desirable, especially with regard to fungal growth. The development of fungi may be reduced or prevented by prior to packaging said cheese in a closed cheese-ripening foil treating the cheese with a fungicide, however if too much oxygen can permeate between the foil and the cheese surface the fungicidal effect may be sustained throughout the desired ripening period of the cheese. In a preferred embodiment, the invention also provides a method wherein prior to packaging said cheese in a closed cheese-ripening foil, the cheese is treated with one or more fungicides, especially selected from the group consisting of natamycine and an organic acid, such as acetic acid or propionic acid. Alternatively or additionally to prior treatment with a fungicide, a fungicide is incorporated into the foil material. In any case it is especially preferred that the fungicide comprises natamycin, and that the OTR < 1000 cm³/m².24 hours.atm at 12 °C and 85%RH. It is noted that natamycin is especially sensitive to oxidative degradation.

The cheese ripening foil can in principle be any foil which has the herein specified WVTR and OTR. However, it appears that not every foil is suitable as packaging foil for foil ripening a cheese. Some foils are much too rigid, such as some prior art foils, and do not shape well around the cheese, leading to for instance undesired voids and/or bad closing (which may for instance be undesired in view of shape, but also in view of fungus growth). It appears that a tensile modulus of 100-600, especially 120-400, even more especially 150-250 MPa may give best results. Hence, the invention further provides a method wherein the cheese-ripening foil has a tensile modulus in the range of 150-250 MPa. It is noted that WO2009047332 is silent on the E-modulus.

The water vapour transmission rate of the cheese-ripening foil is preferably at least 10 g/(m².24 hours), more preferably at least 15 g/(m².24 hours) at 12 °C and 85% relative humidity. Accordingly, even better flavour and/or texture properties can be obtained. Alternatively or more preferably additionally, the water vapour transmission rate of the cheese-ripening foil is preferably at most 300 g/(m².24 hours), more preferably at most 200 g/(m².24 hours), even more preferably at most 150 g/(m².24 hours) at 12 °C and 85% relative humidity. If the water vapour permeability is too high, efficiency of the cheese making process may be reduced as result of excessive moisture loss during ripening, whilst no noticeable further quality gain of the ripened cheese will be achieved.
In order to be able to even better function as a packaging, the cheese-ripening foil preferably further possesses sufficient mechanical properties such as for example puncture resistance and tear strength. In view of this, the thickness of the cheese-ripening foil is preferably at least 15 µm, more preferably at least 25 µm. The thickness of the cheese-ripening foil is preferably less than 200 µm, more preferably less than 100 µm, most preferably less than 75 µm. If the ripening foil is too thick, sealing may take too much time.

Herein, oxygen transmission rate is preferably measured according to ASTM standard D3985 at 12 °C and 85% relative humidity. Although low oxygen permeability is advantageous for preventing mould growth on the surface of the cheese during ripening - for this reason low oxygen permeability values of at most 100 cm³/m².24 hours.atm may be preferred and are preferably obtained when the cheese-ripening foil is provided as a monolithic film - low oxygen permeability of the cheese-ripening foil is not an absolute requirement since mould inhibition can also be successfully achieved in many other ways known to the skilled person, for example by treating the cheeses with a (food-grade) fungicide prior to packaging them into the cheese-ripening foil. As set out above, a ripening foil having an OTR > 120 cm³/m².24 hours.atm at 12 °C and 85% relative humidity furthermore has the capability of providing a better flavour to a cheese ripened therein as compared with a ripening foil having a lower OTR.
The cheese-ripening foil is preferably embodied as a mono- or multilayer foil comprising a polycondensation polymer.
For instance, Ecoflex is a statistical, aliphatic-aromatic co-polyester of the monomers 1,4-butanediol, adipic acid, and a terephthalic acid, and may preferably be used as foil or foil layer in a multi-layer foil. Suitable polymers are for instance described in EP1074570, which is herein incorporated by reference. Enfresin is a polyester urethane copolymer, which may also be particularly suitable, and which may be used as foil or foil layer in a multi-layer foil. Suitable polymers are also described in EP1307510, which is herein incorporated by reference. For instance, a resin composition obtained by blending: (1) an aliphatic polyester formed by an esterification of aliphatic dicarboxylic acid or its anhydride and aliphatic glycol; and/or unsaturated aliphatic dicarboxylic acid or its anhydride or unsaturated aliphatic glycol, and a glycolremoving reaction thereafter; and (2) a polyester urethane formed by a reaction of aliphatic polyester and diisocyanate, may be suitable as foil layer. Further suitable polymers as foil or as foil layer in a multilayer foil may be polyester amides, such as for instance described in WO9621692, which is incorporated herein. PEBAX may also be a suitable foil or foil layer. A polyester block amide, such as PEBAX, is especially preferred. Examples of PEBAX are described in EP1500684, EP1262527 and WO03050159, which are herein incorporated by reference. As part PEBAX, Enfresin, Ecoflex, Akulon, Arnitel, may be obtained from BASF, Arkema and DSM.

The cheese-ripening foil may for instance be embodied as a multi-layer foil. In an embodiment, the layers of the multi-layer foil comprise one or more materials selected from the group consisting of (1) a (preferably statistical) aliphatic-aromatic co-polyester of the monomers 1,4-butanediol, adipic acid and terephthalic acid, (2) a polyester urethane copolymer, (3) a layer based on a resin composition obtained by blending: (a) an aliphatic polyester formed by an esterification of aliphatic dicarboxylic acid or its anhydride and aliphatic glycol; and/or unsaturated aliphatic dicarboxylic acid or its anhydride or unsaturated aliphatic glycol, and a glycolremoving reaction thereafter; and (b) a polyester urethane formed by a reaction of aliphatic polyester and diisocyanate, (4) polyester amides, especially polyester block amides and (5) a layer based on a starch blend. Each of these materials may be present as a single layer or as a blend with another material which is preferably selected from said group of materials (1)-(5) indicated above. Optionally, the multilayer foil may further comprise a polyamide, especially a polyamide-6 (such as an Akulon®), or a polyetherester (such as an Arnitel®), or a mixture of both. The polyamide or the polyetherester may be present as a separate layer or may be mixed in with another material in a layer which is selected from the group of materials (1)-(5) indicated above. The thickness of the foil may especially be in the range of 20-100 µm, such as 30-90 µm, especially 40-70 µm.

As indicated above, the foil or multi-layer foil may optionally comprise a fungicide, such as natamycin.

Good combinations of foils may be multi-layers comprising the set layers of (1) Ecoflex, a starch blend and Ecoflex, (2) Ecoflex, Enfresin and Ecoflex, or Ecoflex, Pebax, and Ecoflex. Good results are obtained when the multi-layer foil comprises at least one layer of a (preferably statistical) aliphatic-aromatic co-polyester of the monomers 1,4-butanediol, adipic acid an terephthalic acid. Especially, good multi-layer foils may comprise a sandwich structure with a first and a third layer of (preferably statistical) aliphatic-aromatic co-polyester of the monomers 1,4-butanediol, adipic acid and terephthalic acid, sandwiching another layer, such as a starch blend, or a polyester urethane copolymer, or a polyester block amide. As will be clear to the person, the foil may comprise one layer, or two layers, or three layers, or more layers, but preferably complies at least with the herein indicated conditions for WVTR and OTR. Combinations of two or more of the herein indicated layers may also be possible. Preferred characteristics of the foil are a foil, especially a multi-layer foil, having a water vapour transmission rate of at least 5 g/(m².24 hours) at 12 °C and 85% relative humidity, and having a oxygen transmission rate of > 120 cm³/m².24 hours.atm and < 1000 cm³/m².24 hours.atm at 12 °C and 85% relative humidity, and a tensile modulus in the range of 150-250 MPa. Prior art foils have too high tensile moduli and/or too high values of OTR, which may lead to a less desirable application of the foil. Especially the combination of too high OTR and too high E-modulus may lead to unwanted voids as a result of with inferior sealing properties and egress of oxygen gas in between the cheese and the foil.

In a further aspect, the cheese-ripening foil used in the method according to the invention has a water vapour transmission rate of at least 5 g/(m².24 hours) at 12 °C and 85% relative humidity, an oxygen transmission rate of > 120 and < 1000 cm³/m².24 hours.atm at 12 °C and 85% relative humidity; and a tensile modulus in the range of 150-400, especially 150-250 MPa at 12 °C and 85% relative humidity. Especially, such cheese-ripening foil may further comprise a carbon dioxide transmission rate CTR > 1000 cm³/m².24 hours.atm at 12 °C and 85% relative humidity.

### The cheese

The cheese is of the Gouda-type, even more especially the cheese is a Gouda. In an especially favourable embodiment, the cheese has a relatively low fat content, i.e. a fat content of 30 wt.% or less relative to the dry weight of the cheese. Such a cheese is even more prone to undergoing shape loss during ripening, so that the presence of the frame during ripening is even more beneficial.

In another embodiment, the Gouda-type cheese, further comprises a strain of *Lactobacillus helveticus.* Also this cheese is preferably ripened at relatively high temperatures of between 14-25 °C.
After removing the foil and the frame, the cheese preferably comprises a drying rind which is visibly present near one or both of its faces and/or the edge. That is, the cheese preferably comprises an outer rind and an interior cheese mass, wherein the colour of the outer rind associated with the first or the second face is preferably darker than the colour of the interior cheese mass.

In a specific embodiment, the foil does (in the absence of a frame) not include a polyether ester. In het yet another embodiment, the foil does (in the absence of a frame) not include a polyether ester foil. In a further embodiment, the invention does (in the absence of a frame) not include polyether ester foil having a thickness of 30 µm. In a further embodiment, the invention does (in the absence of a frame) not include polyether ester foil having a thickness of 30 µm ± 5 µm, especially not a polyether ester foil having a thickness of 30 µm ± 2 µm. In yet a further embodiment, the invention does (in the absence of a frame) not include a polyether ester foil having an OTR of >1000 cm³/m².24 hours.atm at 12 °C and 85% relative humidity. In yet a further embodiment, the invention does (in the absence of a frame) not include a polyether ester foil having an OTR of >1000 cm³/m².24 hours.atm at 12 °C and 85% relative humidity and a WVTR of water vapour transmission rate of at least 65±5,especially 65±2 g/(m².24 hours) at 12 °C and 85% relative humidity.

### The optional frame

The optional frame is preferably made of one or more materials selected from the group consisting of metal, plastic, paper, cardboard and wood. Especially favourably, at least 50 wt.% of the frame is provided as plastic, paper, cardboard or wood. Optionally, the material from which the frame is made contains perforations or holes. Said perforations or holes preferably have a diameter of *ca.* 0.01-50 mm, more preferably of *ca.* 0.1 - 5 mm. In an embodiment, the frame is made of wood.

However, the frame may in an embodiment also be porous, such as mirco porous or meso porous. Especially, such mirco porous or meso porous frame has a water vapour transmission rate of at least 5 g/(m².24 hours) at 12 °C and 85% relative humidity, even more preferably at least 10 g/(m².24 hours), such as at least 50 g/(m².24 hours), especially at least 100 g/(m².24 hours), such as at least 300 g/(m².24 hours), even more especially at least 1000 g/(m².24 hours), with the frame being in contact with the edge in the range of 1-80%, especially 10-80% of the surface of the edge. The dimensions, especially diameter of such micro or meso pore perforations may for instance be selected from the range of 0.5-50 nm.

Hence, the perforations or holes of the frame may in general have a diameter of 0.5 nm-50 mm, such as 1 nm -5 mm. Hence, the frame may in embodiment comprise perforation, having diameters in the range of 0.5 nm - 50 mm.

The perforations may also comprise slits or other type of openings. The length(s) and width(s) of such perforations may also be *ca.* 0.01-50 mm, more preferably of *ca.* 0.1 - 5 mm. Especially, the area of such perforation(s) is selected from the range of 0.1 mm² - 10 cm², such as 0.5 mm² - 2 cm².

The frame may essentially consist of rigid material. However, the frame may in an embodiment also be flexible. For instance, in an embodiment, the frame is a belt.

It is particularly preferred that the frame comprises or more preferably consists of heat sterilisable material. The heat sterilisable material is preferably defined as a material which does not melt at a temperature of 120 °C or less. The heat sterilisable material is preferably a heat sterilisable plastic or a metal such as iron or steel, especially stainless steel. Heat sterilisable plastics are known to the skilled person. and may be selected as, for example, nylon, polyethylene, polypropylene, poly(vinyl chloride), an epoxy-based plastic or a mixture thereof.

In an embodiment, the frame is connected to or forms part of the (preferably wooden) panel or board on which the cheese resides during ripening.

The frame is preferably externally applied to the foil-packaged cheese as a separate element. However the frame may also form an integral part of the cheese-ripening foil, for example in the form of a reinforcing plastic strip.

If the foil-packaged cheese is provided as an essentially block-shaped cheese, it is preferred that the frame is embodied as a square or rectangular-shaped support material surrounding the edge of the cheese, for example as shown in Figure 1(a-d).

The frame F may surround at least part of the edge (E, see figures 1a-1d) of the cheese. This indicates that the frame may in an embodiment entirely surround the edge, i.e. the circumferential length of the frame (in the embodiment of figure 1d this circumferential length is the length of f1+f2+f3+f4) may substantially be equal to the circumferential length of the edge (where the frame is applied) (in figure 1b this circumferential length of the edge is the length el+e2+e3+e4). This may in an embodiment also indicate that the frame surrounds a substantial part of the circumferential length of the edge. For instance, the frame may have an opening (for instance a U-shaped frame). The frame, or elements thereof, may also be part of a larger structure. The cheese (i.e. the foil-packaged cheese) is preferably surrounded by the frame over at least about 80 % of the total circumferential length of the edge (i.e. at least about 80% of the sum of 2 x L + 2 x b), especially at least about 90%. In a specific embodiment, the frame surrounds the edge over the total circumferential length of the edge (figures 1c and 1d schematically depict such embodiment wherein the cheese is surrounded by the frame over 100 % of the total circumferential length of the edge). The term circumferential length relates to the circumference of a cheese, which may especially have a cylindrical shape or which may in a specific embodiment be essentially block shaped, or which may have another shape.

In an embodiment, the frame may substantially surround the entire height of the edge height (in the embodiment of figure 1a height h), but may in an embodiment also surround only part of the height of the edge, such as for instance schematically depicted in figure 1c, where the height of the frame F is smaller than the height of the edge E. Preferably, the frame is in contact with the edge in the order of 1-100%, especially 5-100% of the surface of the edge, such as in the range of 10-80%, like 15-70%, such as 20-60%, especially 20-50%. In the embodiment wherein the frame is in contact with 100% of the edge, i.e. substantially the whole edge between the first and second surface is in contact with the frame. Especially when the frame is of porous material, a low contact percentage with the edge may be possible, like below 20%, or even below 10% (of the surface of the edge). When there is a high contact percentage with the edge, such as equal to or larger than 20% (of the surface of the edge), such as above 40%, the ripening foil and the frame where spatially overlapping, preferably together have a water vapour transmission rate of at least 5 g/(m².24 hours) at 12 °C and 85% relative humidity.

Hence, in an embodiment the frame may entirely surround the edge (so to say 100% of the edge), but only have contact with 80% or less with the edge, due to the presence of perforations or holes in the frame. Hence, for instance the frame may surround the edge for 100% or less, such as 30-100%, such as 50-100% (of the surface of the edge) (especially for the perforated frame), and have contact with the edge of 1-100%, especially 1-80%, such as 10-80% (of the surface of the edge).

The phrase "wherein the frame is in contact with the edge" and similar phrases indicates that the frame is in contact with the edge of the foil-packaged cheese.
The term "diameter" may also refer to non-circular shaped cross-sections of holes or perforations. In such instance, the term "diameter" may refer to the effective diameter (i.e. using the area of the cross-section and define this area as an area of a circle and determine the diameter thereof).

In an embodiment, the frame is in contact with part of the first face and/or part of the second surface in the order of not more than about 70% of the total surface area of the first and/or second surfaces, respectively, such as in the range of 0-60%, especially in the range of about 0-10%. Hence, the frame may be in contact with part of the first face and/or part of the second surface.

In a preferred embodiment, the frame comprises elements which are connectable by (releasable) fastening means, such as a belt or a clip. To provide the frame, such elements may be assembled by connecting with the fastening means. Accordingly, the foil-packaged cheese may be surrounded by the frame more easily. With one or more releasable fastening means, the frame can be conveniently removed after the cheese has obtained a desired ripening time. For instance, referring to figure 1d, the elements f1, f2, f3 and f4 may be separate elements that are joined together with (releasable) fastening means.

In an embodiment, the frame may be further in contact with the first face and/or the second face of the foil-packaged cheese. Accordingly, the cheese may be even better protected against mechanical damage. It is preferred, however, that the frame does not completely block moisture evaporation from the cheese. This may conveniently be achieved for example by ensuring that the surface of the frame being in contact with the edge is in the order of 1-80%, such as 10-80%, like 20-50%, of the surface of the edge. The frame may be provided with perforations or holes as indicated above. In such embodiment, the edge may be surrounded by the frame over its total circumferential length (and optionally also its total height) whereas the area of the edge being in contact with the frame is (substantially) lower than 100% of the total area of the edge.

The term "surround" and derivatives do include embodiments wherein the foil-packaged cheese has a substantially cylindrical shape, wherein the frame surrounds at least part of the cylindrical edge and embodiments wherein the foil-packaged cheese has a block-shaped shape, wherein the frame surrounds at least part of the rectangular edge of the foil-packaged cheese.

### Ripening conditions

The foil-packaged cheese is preferably ripened under conditions of controlled relative humidity and temperature. The relative humidity preferably ranges between 20-95%. It is especially preferred that the relative humidity ranges between 75 and 90%. Preferably, the air near the foil-packaged cheese is displaced at a rate of 0.01 - 5 m/s, more preferably at a rate of 0.05 - 3 m/s. The temperature preferably ranges between 6-25 °C. In an especially preferred embodiment, the temperature ranges between 11 and 20 °C during ripening. The conditions together with the water vapour transmission rate of the cheese-ripening foil are especially preferably chosen such that during ripening in (c.) the total amount of moisture which is allowed to evaporate from the foil-packaged cheese is 0.5 - 20 wt.%, more preferably 1-15 wt.% relative to the weight of the foil-packaged cheese provided in (b.). The ripening time may be in the range of about 28 days or longer, and in general equal to or less than about 2 years, preferably equal to or less than about 1 year, such as bout 3 months.

Preferably, during ripening, the foil-packaged cheese is allowed to rest on any one of its first or second face. Alternatively or more preferably additionally, during ripening, the foil-packaged cheese is turned upside-down at least once. Accordingly, an even moisture evaporation can be obtained from the first face and the second face. As an additional advantage, for brined cheeses, turning the foil-packaged cheese upside-down at least once will promote an even distribution of the brine within each foil-packaged cheese during ripening. Hence, in a preferred embodiment, the cheeses are individually ripened and are not in contact with other cheeses. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

### Further embodiments of the method

After the foil-packaged cheese has been ripened for a desired time, the frame is preferably removed. Alternatively or more preferably additionally, after the foil-packaged cheese has been ripened for a desired time, the cheese-ripening foil is removed.

In case both the frame and the cheese-ripening foil are removed, the "naked" cheese thus obtained is preferably further packaged in an essentially gas- and water-impermeable foil and/or is provided with a layer of a cheese coating or cheese wax. If it is further packaged in an essentially gas- and water-impermeable foil, it may be stored, preferably with cooling to below 7 °C, without further ripening and/or evaporative weight loss to occur. Accordingly, cheese may be stored until necessary and keep its desired "ripening age", which is an important logistical advantage. Similar advantage may be obtained if the naked cheese is provided with a layer of cheese wax, preferably by dipping. If the naked cheese is provided with one or more layers of a water-borne cheese coating composition, which preferably comprises an emulsion (co)polymer, the cheese obtains the appearance of a traditionally natural ripened cheese, which may be advantageous for some applications.
In case both only the frame is removed, the ripened foil-packaged cheese thus obtained may also preferably be further packaged in an essentially gas- and water-impermeable foil or may be provided with a layer of a cheese coating or cheese wax. Comparable advantages may be obtained, especially for further packaging in the essentially gas- and water-impermeable foil or providing the layer of cheese wax.

After removing the foil and the frame, the cheese preferably comprises an outer rind and an interior cheese mass, wherein the colour of the outer rind associated with the first or the second face is darker than the colour of the interior cheese mass. This phenomenon, commonly associated with natural ripened cheeses, is known to the skilled person as a "drying rind".
The cheese provided in (a.) of the method according to the invention and/or the ripened foil-packaged cheese obtainable thereby preferably comprise at least one strain of *Lactococcus lactis* spp. *lactis* and at least one strain of *Lactococcus lactis* spp. *cremoris.* Even more preferably, the cheese further comprises a strain of *Lactococcus lactis* spp. *lactis* biovar. *diacetylactis* and/or a strain of *Leuconostoc.* Accordingly, a semi-hard cheese having a typical Gouda flavour may be favourably obtained.

### EXAMPLES

### Example 1

A block-shaped cheese produced using a so-called LD-starter (*i.e.* comprising one or more strains of each of *Lactococcus lactis* spp. *lactis, Lactococcus lactis* spp. *cremoris, Lactococcus lactis* spp. *lactis* biovar. *diacetylactis* and *Leuconostoc*) was divided in 4 parts each measuring 15cm(w) x 11cm(h) x 25cm(1). The cheese was packaged in a closed cheese-ripening foil made of a commercially available polyester urethane copolymer. Before packaging the cheese in said foil, its surface was treated with an aqueous suspension comprising 500 ppm of natamycin.
The foil had a thickness of 50 µm. The oxygen transmission rate (OTR) of the foil was determined as 750 ml.m⁻².bar⁻¹.24h⁻¹ at 12 °C and 85% relative humidity. The water vapour transmission rate (WVTR) was determined as 18 g.m⁻².24h⁻¹ at 12 °C and against an atmosphere of 85% relative humidity.
OTR was measured according to ASTM standard D3985 using Mocon equipment. WVTR was measured according to the ASTM E96B cup test at 12 °C and against 85% relative humidity (the relative humidity within the cup is 100%).
The cheeses were placed on a wooden shelf, leaving sufficient space (between 10 and 50 cm) between them. The foil-packaged cheeses were allowed to ripen under controlled conditions of 12 °C and 83% relative humidity. After 60 days, the weight loss from the cheeses - due to evaporation of moisture - was on average 4 wt.%. By comparison, similarly sized cheese blocks which were "naturally ripened" during the same period of 60 days and under the same conditions lost approx. 12 wt.% of their original weight; the natural ripening process comprised 15 half-sided treatments with a water-borne cheese-coating composition (Ceska WL) each half-sided treatment followed by turning of the cheese upside-down.

The foil-packaged cheeses were observed to undergo shape-loss in time, especially the cheeses became flattened.

Said shape-loss can be prevented or at least diminished by ripening the foil-packaged cheeses in the presence of a frame. The frame can preferably be made of wood or plastic which may have a thickness of between 1 and 10 mm. The frame has interior dimensions of approx. 15(L)x25(b) cm (rectangular-shaped) and tightly surrounds the edge of the cheese (*cf*. Figure 1 for a further illustration).

### Example 2: Foil examples

Several foils were tested, with different layer structures and types of layers. Further, the cheeses were evaluated.

**Table 1: some examples of some applied foils**

| **Code** | **Thickness, [µm]** | **Foil structure** |
|---|---|---|
| 1912 | 55 | Ecoflex - starch blend with 50% starch- Ecoflex, 10-80-10 % |
| 1913 | 69 | Ecoflex - starch blend with 50% starch - Ecoflex, 10-80-10 % |
| 1914 | 50 | Ecoflex - starch blend with 50% starch - Ecoflex, 10-80-10 % |
| 1915 | 52 | Ecoflex - starch blend with 50% starch - Ecoflex, 20-60-20 % |
| 1916 | 64 | Ecoflex - starch blend with 50% starch - Ecoflex, 20-60-20 % |
| 1917 | 67 | Ecoflex - starch blend with 50% starch - Ecoflex, 30-40-30 % |
| 1918 | 50 | Ecoflex - starch blend with 50% starch - Ecoflex, 20-60-20 % |
| 1919 | 52 | Ecoflex - Enfresin - Ecoflex, 15-70-15 % |
| 1920 | 58 | Ecoflex - Enfresin - Ecoflex, 15-70-15 % |
| 1921 | 56 | Ecoflex - PEBAX 6100MV - Ecoflex, 15-70-15 % |
| 1922 | 67 | Ecoflex - PEBAX 6100MV - Ecoflex, 15-70-15 % |

| | | |
|---|---|---|
| Ecoflex® is a biodegradable, statistical, aliphatic-aromatic co-polyester of the monomers 1,4-butanediol, adipic acid a terephthalic acid. Enfresin® is a biodegradable polyester urethane copolymer. PEBAX® is a polyester block amide. Those polymers are commercially obtainable. | | |

**Table 2: properties of some foils per se, OTR and CTR in [ml/m².bar.day] at 12°C and 85%RH and WVTR in [g/m².day] at 12°C, 100% RH inside and 85%RH outside**

| **Code** | **Thickness, [µm]** | **OTR** | **CTR** | **WVTR** |
|---|---|---|---|---|
| 1914 | 50 | 849 | 9329 | 13,5 |
| 1915 | 50 | 882 | 9488 | 15,2 |
| 1918 | 50 | 918 | 9653 | 17,5 |
| 1919 | 50 | 810 | 8149 | 19,7 |
| 1921 | 50 | 1000 | 12388 | 55,3 |
| Prior art reference foil 1 | 50 | <100 | <500 | 0,5 |
| Traditionally ripened | - | - | - | - |

The traditionally (naturally) ripened cheese was prepared by applying to the surface facing upwards and to the edges of the cheese a plastics coating, i.e. Ceska 200.03.45, repeatedly at time intervals of 24-96h followed by turning the cheese upside down, according to a coating protocol for obtaining naturally ripened Gouda-type cheese as known to the skilled person.

**Table 3: thickness and tensile strength of some applied foils.**

| **Code** | **Thickness (µm)** | **Tensile modulus (E-modulus) (MPa)** |
|---|---|---|
| PE | 61 | 235 [33] |
| 1913 | 69 | 19 [14] |
| 1914 | 50 | 34 [5] |
| 1915 | 52 | 49 [19] |
| 1916 | 64 | 62 [5] |
| 1917 | 67 | 80 [23] |
| 1918 | 50 | 61 [32] |
| 1919 | 52 | 53 [21] |
| 1920 | 58 | 61 [21] |
| 1921 | 56 | 206 [18] |
| 1922 | 67 | 190 [20] |
| Prior art reference foil 1 | 57 | 256 |

Further to Table 3, for comparative reasons E-moduli of the materials mentioned in WO2009047332, Table 1 have also been determined. Thus a foil entirely composed of Arnitel VT3108 has an E-modulus of well below 150 MPa and a foil entirely composed of Akulon F-136-E2 or comprising 85/15 Akulon/Arnitel blends as disclosed in WO2009047332 has an E-modulus in the order of 500 MPa (foil thickness between 30 and 50 micron; E-moduli determined at 12 °C and 85% relative humidity).

The taste and texture of cheeses 1914 and 1921 were best. The texture is firm, but also smooth ("smedig"), and a very well balanced taste. The reference foil cheese had a sticky texture and had a butter like and acid taste. Naturally ripened cheeses were considered too salty and dry. The ripening test shows that a too low water vapour transmission rate (reference foil 1) is not desired. It further seems that a water vapour transmission rate in the range of 10-60 g/m2.day at 12°C at 85% RH may provide good cheeses.

### Example 3: Examples including flavor tests

Cheeses used for coating by CSK were 4 kg blocks obtained by cutting so called "Euroblok" cheeses, weight 16 kg, into four quarters. The "Euroblok" cheeses were all produced on the same day from the same batch of milk according to a protocol for Gouda cheese production. The 4 kg blocks were provided with the materials according to table 2; the traditionally (naturally) ripened cheese was prepared by applying to the surface facing upwards and to the edges of the cheese a plastics coating, i.e. Ceska 200.03.45, repeatedly at time intervals of 24-96h followed by turning the cheese upside down, according to a coating protocol for obtaining naturally ripened Gouda-type cheese as known to the skilled person. Experiments were performed in triplicate. The materials (i.e. foils or coating) applied and their properties are shown in Table 2 (note that table 2 gives the properties of the foils per se related to internally comparable thicknesses; the thickness of the coatings applied may be different, see for instance table 3).

The treated cheeses were ripened at for 11 weeks at standard conditions for Gouda cheese. Three good quality cheeses (no mold growth on the surface) were selected from each (coating) variety. Sector samples were cooled (4°C) and used for analysis. For this, the cheese samples delivered were grated and stored at -20°C until analysis. The foil ripened cheese samples were completely grated, from the other cheeses the outer 2 mm (coating) layer was removed prior to grating.

Gas chromatography-Mass Spectrometry (GCMS) was performed on a TRACE GC/MS DSQ GCTQ8 (FactorFour VF-1ms 60m x 0.25mm Df=1µ column) with 25 min runtime. Headspace sampling was done by solid-phase micro extraction (SPME) at 60°C and analysis was performed on 3 g samples of grated mixed material. Compounds detected were identified using the MS in both SIR and full scan mode. After identification of peaks correspond ding to key-aroma compounds, their areas in all the chromatograms were determined using Xcalibur software. Peak areas generated were used for data analysis ("targeted" analysis) as well as the total (of all compounds) information in the chromatograms.

Two metabolomics approaches were used to characterize cheese coatings: (i) targeted metabolomics: in GCMS compound profiles of the cheeses with various coatings compounds known to be associated with cheese flavour were identified and quantified; (ii) untargeted metabolomics: compound fragment masses that are different between one or more cheese coatings are determined using the Random Forest machine learning algorithm. Next, these compound fragment masses are linked to compounds. In the comparison of both approaches the question was whether the untargeted approach could yield the compounds that are in the targeted compound list and if additional "unexpected" compounds that differ between the cheese coatings were found. For each of the 21 samples a GCMS spectrum has been generated. The GCMS spectra have been aligned using Metalign. MS scans were obtained during sampling the GC effluent in time. The data consists of peak heights for each combination of mass and scan number. These data have not been normalized or scaled before applying untargeted metabolomics. For targeted analysis GCMS spectra were not aligned. Based both on targeted and untargeted analysis a table was constructed with volatile flavour compounds. All individual (triplicate) data were used, and no averages were taken. All data were analyzed using hierarchical clustering with average linkage clustering as agglomeration rule. The measurements for the different metabolites were on different scales. Therefore, data for each metabolite was normalized by generating z-scores.

31 volatile flavour compounds (metabolites) potentially relevant for Gouda-type cheese flavour were identified by GCMS during targeted and untargeted analysis and relative peak areas were determined. The compounds semi-quantified are listed: ethanol; 2,3-butanediol*; acetone; ethylbutanoate; 2-methylpropanal; 3-methylbutanoic acid*; diacetyl*; 2-methylbutanoic acid*; 3-methyl-2-butanone; 2-heptanone; 2-butanone*; benzaldehyde; ethylacetate; hexanoic acid*; acetic acid; hexanoic acid ethyl ester; 3-methylbutanal; 2-nonanone*; 2-pentanone; octanoic acid*; pentanal; 2-undecanone; acetoine; 1-hexanol#; 3-methylbutanol*; phenylacetaldehyde#; 2-methylpropanoic acid*; butyric acid; nonanoic acid#; and decanoic acid#, with * compounds resulting from the targeted and untargeted metabolomics, and with # compounds only found during untargeted metabolomics. Of especially interest are 2-methylpropanoic acid, 2-methylbutanoic acid, 3-methylbutanoic acid, butyric acid, 2-methylpropanal, hexanoic acid, octanoic acid, and decanoic acid, more especially 2-methylbutanoic acid, 3-methylbutanoic acid, and octanoic acid.

Comparison of the compounds resulting from the untargeted metabolomics approach with those from targeted analysis showed that the untargeted approach yielded only few additional compounds that differed between coatings (marked with # above). The untargeted approach did yield most of the compounds in the targeted list. A reason for certain compounds missing in the untargeted approach versus targeted approach could be due to e.g. noise in the GC chromatograms.

In summary, it appeared that the metabolite pattern with foils according to the invention are in more agreement with traditionally ripened Gouda cheese than foils with a too low OTR (reference foil ripened).

### Example 4: proposals for suitable foils, assuming a thickness of 50 µm.

| | **Thickness (µm)** | **OTR [ml/m².bar.day]** | **CTR** | **WVTR [g/m².day]** | **Tensile strength (E-modulus) [Mpa]** |
|---|---|---|---|---|---|
| Akulon/Ecoflex/enfresin/ecoflex/ Akulon (15/10/50/10/15) | 50 | 182 | 461 | 22 | 199 |
| Bioflex 219/enfresin/bioflex 219 (/PLA) (15-70-15) | 50 | 665 | 7391 | 14.5 | 158 |
| Ecoflex/Akulon/ Ecoflex/ (46-8-46) | 50 | 72 | 1421 | 70 | 242 |
| Ecoflex/Pebax/Ecoflex (30-40-30) | 50 | 936 | 9515 | 119 | 207 |

| | | | | | |
|---|---|---|---|---|---|
| Note that the Ecoflex/Akulon/ Ecoflex/ (46-8-46) foil has a too low OTR. To provide a higher OTR value, the thickness of the Akulon layer may be decreased. | | | | | |

## Claims

1. A method for foil-ripening a Gouda type cheese comprising:
a. providing a cheese having an edge, a first face and a second face;
b. packaging said cheese in a closed cheese-ripening foil having a water vapour transmission rate of at least 5 g/(m².24 hours) at 12 °C and 85% relative humidity, and having an oxygen transmission rate of at least 120 and < 1000 cm³/m².24 hours.atm at 12 °C and 85% relative humidity; and
c. ripening the foil-packaged cheese wherein during ripening moisture is allowed to evaporate from said cheese.

2. The method according to claim 1, wherein the cheese-ripening foil has an oxygen transmission rate in the range of > 120 and ≤ 900 cm³/m².24 hours.atm at 12 °C and 85% relative humidity.

3. The method according to any one of the preceding claims, wherein the cheese-ripening foil has a tensile modulus in the range of 150-400, especially 150-250 MPa at 12 °C and 85% relative humidity.

4. The method according to any one of the preceding claims, wherein prior to packaging said cheese in a closed cheese-ripening foil, the cheese is treated with one or more fungicides, especially selected from the group consisting of natamycine and an organic acid.

5. The method according to any one of the preceding claims, wherein during ripening in (c.) the total amount of moisture which is allowed to evaporate from the foil-packaged cheese is 0.5 - 20 wt.%, more preferably 1-15 wt.% relative to the weight of the foil-packaged cheese provided in (b.).

6. The method according to any one of the preceding claims, comprising ripening the foil-packaged cheese in the presence of a frame which surrounds at least part of the edge of said cheese, especially wherein the frame is in contact with the edge in the range of 1-80% of the surface of the edge.

7. The method according to any one of the preceding claims, wherein the cheese thus obtained is further packaged in an essentially gas- and water-impermeable foil or is provided with a layer of a cheese coating or cheese wax.

8. The method according to any one of the preceding claims, wherein the ripened foil-ripened cheese obtained in (c.) comprises a drying rind which is visibly present near one or both of its faces and/or the edge.

9. The method according to any one of the preceding claims, wherein the cheese further comprises a strain of *Lactobacillus helveticus* or propionibacteria.

10. The method according to any one of the preceding claims, wherein the foil has a carbon dioxide transmission rate CTR > 1000 cm³/m².24 hours.atm at 12 °C and 85% relative humidity.

11. The method according to any one of the preceding claims, wherein the cheese is preferably of the Gouda type, wherein the cheese contains branched organic acids obtainable by amino acid catabolism in *Lactococcus lactis* spp in levels which are comparable to those occurring in naturally ripened cheese, preferably of the Gouda type.

12. A foil-packaged Gouda type cheese, optionally at least partially surrounded by a frame, obtainable according to the method of any one of claims 1-11.

## Patentansprüche

1. Verfahren zum Folienreifen eines Käses des Typs Gouda, umfassend:
a. Bereitstellen eines Käses mit einer Kante, einer ersten Fläche und einer zweiten Fläche;
b. Packen des Käses in eine geschlossene Käsereifungsfolie mit einer Wasserdampfübertragungsrate von wenigstens 5 g/(m².24 Stunden) bei 12°C und 85% relativer Feuchtigkeit, und mit einer Sauerstoffübertragungsrate von wenigstens 120 und <1000 cm³/m².24 Stunden.atm bei 12°C und 85% relativer Feuchtigkeit; und
c. Reifen des folienverpackten Käses, wobei während des Reifens Feuchtigkeit aus dem Käse abdampfen kann.

2. Verfahren nach Anspruch 1, wobei die Käsereifungsfolie eine Sauerstoffübertragungsrate im Bereich von >120 und ≤900 cm³/m².24 Stunden.atm bei 12°C und 85% relativer Feuchtigkeit aufweist.

3. Verfahren nach einem der vorangehenden Ansprüche, wobei die Käsereifungsfolie einen Zugmodul im Bereich von 150 - 400, insbesondere 150 - 250 MPa bei 12°C und 85% relativer Feuchtigkeit aufweist.

4. Verfahren nach einem der vorangehenden Ansprüche, wobei vor dem Packen des Käses in eine geschlossene Käsereifungsfolie der Käse mit einem oder mehreren Fungiziden behandelt wird, insbesondere ausgewählt aus der Gruppe bestehend aus Natamycin und einer organischen Säure.

5. Verfahren nach einem der vorangehenden Ansprüche, wobei während des Reifens in (c.) die gesamte Menge an Feuchtigkeit, die aus dem folienverpackten Käse verdampfen kann, 0,5 - 20 Gew.-%, bevorzugter 1 - 5 Gew.-% relativ zu dem Gewicht des in (b.) folienverpackten Käses ist.

6. Verfahren nach einem der vorangehenden Ansprüche, umfassend ein Reifen des folienverpackten Käses in der Gegenwart eines Rahmens, der wenigstens einen Teil der Kante des Käses umgibt, insbesondere wobei der Rahmen in Kontakt mit der Kante im Bereich von 1 - 80% der Oberfläche der Kante ist.

7. Verfahren nach einem der vorangehenden Ansprüche, wobei der so erhaltene Käse ferner in einer im Wesentlichen Gas- und Wasser-impermeablen Folie verpackt wird oder mit einer Schicht einer Käsebeschichtung oder eines Käsewachses bereitgestellt wird.

8. Verfahren nach einem der vorangehenden Ansprüche, wobei der in (c.) erhaltene gereifte foliengereifte Käse eine Trocknungsrinde umfasst, die nahe einer oder beiden seiner Flächen und/oder der Kante sichtbar vorhanden ist.

9. Verfahren nach einem der vorangehenden Ansprüche, wobei der Käse ferner einen Stamm von *Lactobacillus helveticus* oder Propionibakterien umfasst.

10. Verfahren nach einem der vorangehenden Ansprüche, wobei die Folie eine Kohlendioxidübertragungsrate CTR >1000 cm³/m².24 Stunden.atm bei 12°C und 85% relativer Feuchtigkeit aufweist.

11. Verfahren nach einem der vorangehenden Ansprüche, wobei der Käse bevorzugt des Typs Gouda ist, wobei der Käse verzweigte organische Säuren enthält, die erhältlich sind durch Aminosäurekatabolismus in *Lactococcus lactis* spp in Gehalten, die vergleichbar sind mit solchen, die bei natürlich gereiftem Käse, vorzugsweise des Typs Gouda, auftreten.

12. Folienverpackter Käse des Typs Gouda, optional wenigstens teilweise umgeben durch einen Rahmen, erhältlich nach dem Verfahren nach einem der Ansprüche 1 - 11.

## Revendications

1. Méthode d'affinage sous feuille d'un fromage de type Gouda comprenant :
a. la fourniture d'un fromage ayant un bord, une première face et une seconde face ;
b. l'emballage dudit fromage dans une feuille fermée d'affinage de fromage ayant une vitesse de transmission de vapeur d'eau d'au moins 5 g/(m².24 heures) à 12 °C et 85 % d'humidité relative, et ayant un vitesse de transmission d'oxygène d'au moins 120 et < 1 000 cm³/m².24 heures.atm à 12 °C et 85 % d'humidité relative, et
c. l'affinage du fromage emballé sous feuille dans lequel, pendant l'affinage, l'humidité peut s'évaporer dudit fromage.

2. Méthode selon la revendication 1, dans laquelle la feuille d'affinage de fromage a une vitesse de transmission d'oxygène dans la plage de > 120 et ≤ 900 cm³/m².24 heures.atm à 12 °C et 85 % d'humidité relative.

3. Méthode selon l'une quelconque des revendications précédentes, dans laquelle la feuille d'affinage de fromage a un module de traction dans la plage de 150 à 400, en particulier de 150 à 250 MPa à 12 °C et 85 % d'humidité relative.

4. Méthode selon l'une quelconque des revendications précédentes, dans laquelle avant d'emballer ledit fromage dans une feuille fermée d'affinage de fromage, le fromage est traité à l'aide d'un ou plusieurs fongicides, spécialement choisis parmi le groupe constitué de natamycine et d'un acide organique.

5. Méthode selon l'une quelconque des revendications précédentes, dans laquelle, pendant l'affinage en (c.), la quantité totale d'humidité qui peut s'évaporer du fromage emballé sous feuille est de 0,5 à 20 % en poids, de manière plus préférée de 1 à 15 % en poids par rapport au poids du fromage emballé sous film fourni en (b.).

6. Méthode selon l'une quelconque des revendications précédentes, comprenant l'affinage du fromage emballé sous feuille en présence d'un cadre qui entoure au moins une partie du bord dudit fromage, en particulier dans laquelle le cadre est en contact avec le bord dans la plage de 1-80 % de la surface du bord.

7. Méthode selon l'une quelconque des revendications précédentes, dans laquelle le fromage ainsi obtenu est en outre emballé dans une feuille essentiellement imperméable aux gaz et à l'eau ou est doté d'une couche de revêtement de fromage ou de cire de fromage.

8. Méthode selon l'une quelconque des revendications précédentes, dans laquelle le fromage affiné sous feuille affiné obtenu en (c.) comprend une croûte de séchage qui est visiblement présente à proximité de l'une ou de ses deux faces et/ou du bord.

9. Méthode selon l'une quelconque des revendications précédentes, dans laquelle le fromage comprend en outre une souche de *Lactobacillus helveticus* ou des bactéries propioniques.

10. Méthode selon l'une quelconque des revendications précédentes, dans laquelle la feuille a une vitesse de transmission de dioxyde de carbone CTR > 1 000 cm³/m².24 heures.atm à 12 °C et 85 % d'humidité relative.

11. Méthode selon l'une quelconque des revendications précédentes, dans laquelle le fromage est de préférence du type Gouda, dans laquelle le fromage contient des acides organiques ramifiées pouvant être obtenus par un catabolisme d'acides aminés dans *Lactococcus lactis* spp à des niveaux qui sont comparables à ceux qui apparaissent dans du fromage affiné naturellement, de préférence du type Gouda.

12. Fromage de type Gouda emballé sous feuille entouré de manière facultative au moins partiellement par un cadre, pouvant être obtenu conformément à la méthode selon l'une quelconque des revendications 1-11.
